(19) **Europäisches Patentamt / European Patent Office / Office européen des brevets**

(11) **EP 3 364 171 B1**

(12) **FASCICULE DE BREVET EUROPEEN**

(45) Date de publication et mention
de la délivrance du brevet:
**22.07.2020 Bulletin 2020/30**

(51) Int Cl.:
*G01N 21/43* *(2006.01)* *G01N 21/552* *(2014.01)*
*G01N 21/77* *(2006.01)*

(21) Numéro de dépôt: **18156782.7**

(22) Date de dépôt: **14.02.2018**

(54) **PROCEDE DE DETECTION D'UNE VARIATION LOCALE D'INDICE DE REFRACTION D'UN MILIEU DIELECTRIQUE SITUE A LA SURFACE D'UN CAPTEUR OPTIQUE**

VERFAHREN ZUR ERFASSUNG EINER LOKALEN VARIATION DES BRECHUNGSINDEXES EINES DIELEKTRISCHEN MEDIUMS, DAS SICH AN DER OBERFLÄCHE EINES OPTISCHEN SENSORS BEFINDET

METHOD FOR DETECTING A LOCAL CHANGE IN THE REFRACTIVE INDEX OF A DIELECTRIC MEDIUM PLACED AT THE SURFACE OF AN OPTICAL SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2017 FR 1751242**

(43) Date de publication de la demande:
**22.08.2018 Bulletin 2018/34**

(73) Titulaire: **Commissariat à l'Energie Atomique et aux Energies Alternatives
75015 Paris (FR)**

(72) Inventeurs:
- **VINDAS, Karim
  38000 Grenoble (FR)**
- **ENGEL, Elodie
  38000 Grenoble (FR)**
- **LEROY, Loic
  38000 Grenoble (FR)**
- **LIVACHE, Thierry
  38560 Jarry (FR)**
- **BUHOT, Arnaud
  38960 Saint Etienne de Crossey (FR)**

(74) Mandataire: **Gevers & Orès
Immeuble le Palatin 2
3 Cours du Triangle
CS 80165
92939 Paris La Défense Cedex (FR)**

(56) Documents cités:
CN-A- 101 788 478   DE-A1- 3 327 668
US-A- 5 359 681   US-A- 5 815 278
US-A1- 2014 002 821

- CHEN YUZHI ET AL: "Effects of Incident Light Modes and Non-Uniform Sensing Layers on Fiber-Optic Sensors Based on Surface Plasmon Resonance", PLASMONICS, SPRINGER US, BOSTON, vol. 12, no. 3, 30 juin 2016 (2016-06-30), pages 707-715, XP036229110, ISSN: 1557-1955, DOI: 10.1007/S11468-016-0317-Z [extrait le 2016-06-30]
- LI SHUNA ET AL: "Highly Sensitive, Bloch Surface Wave D-Type Fiber Sensor", IEEE SENSORS JOURNAL, IEEE SERVICE CENTER, NEW YORK, NY, US, vol. 16, no. 5, mars 2016 (2016-03), pages 1200-1204, XP011598485, ISSN: 1530-437X, DOI: 10.1109/JSEN.2015.2498947 [extrait le 2016-02-08]
- FAN X ET AL: "Sensitive optical biosensors for unlabeled targets: A review", ANALYTICA CHIMICA ACTA, ELSEVIER, AMSTERDAM, NL, vol. 620, no. 1-2, 14 juillet 2008 (2008-07-14), pages 8-26, XP022732615, ISSN: 0003-2670, DOI: 10.1016/J.ACA.2008.05.022 [extrait le 2008-06-13]

**Description**

L'invention concerne un procédé de détection d'une variation locale d'indice de réfraction d'un milieu diélectrique situé à la surface d'un capteur optique.

En particulier, cette détection peut consister à déterminer la valeur d'une telle variation locale de l'indice de réfraction du milieu diélectrique.

Le capteur optique comprend généralement un guide d'onde comprenant une région recouverte d'au moins une couche métallique ou diélectrique, dite région active, en contact avec le milieu diélectrique.

Par exemple, lorsque ladite couche est métallique, le capteur optique forme alors un capteur à effet plasmon.

Un capteur à effet plasmon est bien connu de l'homme du métier.

Généralement, le guide d'onde est alors une fibre optique dont une partie, à savoir la région active, est dépourvue de gaine et le cœur de cette région active est recouvert de la couche métallique destinée à être en contact avec un milieu diélectrique. Le milieu diélectrique peut être liquide ou gazeux. Le capteur ainsi formé est associé à une source optique, émettant sur une plage de longueur d'onde donnée et peut fonctionner en réflexion ou en transmission. L'interaction entre certains modes de propagation du faisceau lumineux et la couche métallique permet de générer une résonance plasmon au niveau de l'interface entre la couche métallique et le milieu diélectrique.

En pratique, cela se traduit par une diminution de l'intensité lumineuse réfléchie ou transmise par la région active, qu'on peut mesurer. Ce type de capteur est par exemple employé en tant que biocapteur. En effet, lorsque l'on greffe sur la région active des sondes spécifiques (ex. : anticorps) dirigés contre un analyte également spécifique, la reconnaissance de cet analyte par la sonde dédiée, va modifier localement l'indice de réfraction du milieu diélectrique dans lequel l'analyte est situé, à proximité de l'interface entre la couche métallique et le milieu diélectrique. Cette modification locale de l'indice de réfraction décale la position du pic de résonance plasmon modifiant ainsi l'intensité de la lumière réfléchie ou transmise.

Ainsi, en mesurant cette variation d'intensité, on est en mesure de détecter l'adsorption de l'analyte par la sonde.

Selon un autre exemple, lorsque ladite couche est diélectrique, le capteur optique peut alors former un capteur interférométrique.

De nombreuses configurations de guide d'ondes, et plus spécifiquement de fibres optiques pour former un capteur à effet plasmon ou autre ont déjà été proposées.

Un but récurrent de ces configurations est notamment de pouvoir proposer un capteur optique sensible, que celui-ci fonctionne en réflexion ou en transmission.

On pourra par exemple se référer à l'article de K. Kurihara & al., « Fiber-optic conical microsensors for surface plasmon resonance using chemical etched single-mode fiber », Analytica Chimica Acta, vol. 523 (2), pp. 165-170 (2004) (**D1**). D'autres types de capteurs à effet plasmon sont illustrés dans les documents US5359681, US2014/0002821 et US5815278.

Dans les approches connues, c'est donc généralement une conception particulière du guide d'onde qui est proposée.

L'invention vise à proposer une approche différente.

Pour atteindre cet objectif, l'invention propose un procédé de détection d'une variation locale d'indice de réfraction d'un milieu diélectrique situé à la surface d'un capteur optique, le capteur optique comportant à cet effet soit un guide d'onde comprenant une région, dite région active, recouverte d'au moins une couche métallique et/ou diélectrique en contact avec le milieu diélectrique, soit un guide d'onde faisant face à un autre guide d'onde, cet autre guide d'onde formant résonateur et constituant une région, dite région active, en contact avec le milieu diélectrique, le procédé comprenant les étapes suivantes :

a) émettre un faisceau lumineux en entrée du guide d'onde de sorte que ce faisceau lumineux puisse se propager, au sein du guide d'onde, selon au moins N modes de propagation où N est un entier naturel tel que $N \geq 2$ en direction de la région active ; le faisceau lumineux réfléchi ou transmis par la région active présentant ainsi une répartition spatiale donnée de l'intensité

b) mesurer sur au moins une zone de la répartition spatiale de l'intensité du faisceau lumineux réfléchi ou transmis par ladite région active du capteur optique qui ne prend en compte qu'une partie de cette répartition spatiale, l'intensité sur ladite au moins une zone ; et

c) détecter la variation locale de l'indice de réfraction du milieu diélectrique au moyen d'une base de données fournissant le lien entre l'intensité de ladite au moins une zone de la répartition spatiale de l'intensité du faisceau lumineux réfléchi ou transmis par la région active du capteur optique et une variation d'indice de réfraction par rapport à un milieu de référence

Le procédé conforme à l'invention pourra également mettre en œuvre les étapes suivantes, prises seules ou en combinaison :

- l'étape c) consiste à déterminer la valeur de la variation locale de l'indice de réfraction du milieu diélectrique ;
- on met en œuvre une étape consistant à déterminer la valeur de l'indice de réfraction du milieu de référence puis, après avoir déterminé la valeur de la variation locale de l'indice de réfraction du milieu diélectrique au cours de l'étape c), à déterminer la valeur de l'indice de réfraction du milieu diélectrique ;
- entre l'étape a) et l'étape b), on réalise une étape additionnelle consistant à filtrer au plus N-1 modes de propagation, ce filtrage s'effectuant sur le ou les modes les moins susceptibles d'être modifiés par la région active ou n'ayant pas été modifiés par la région active ;
- ladite étape additionnelle est réalisée en amont, en référence au sens de parcours du faisceau lumineux dans le guide d'onde, de la région active du capteur optique pour assurer un filtrage sur le ou les modes les moins susceptibles d'être modifiés par la région active ;
- ladite étape additionnelle est réalisée au moyen d'un objectif « fond noir », à savoir d'un objectif présentant un diaphragme opaque en son centre ;
- ladite étape additionnelle est réalisée en aval, en référence au sens de parcours du faisceau lumineux dans le guide d'onde, de la région active du capteur optique pour assurer un filtrage au moins sur le ou les modes n'ayant pas été modifiés par la région active ;
- le guide d'onde est une fibre optique ;
- le procédé étant mis en œuvre en réflexion, la région active du capteur optique, qui est donc la région active de la fibre optique, présente une forme de cône tronqué à l'extrémité duquel est situé un miroir ;
- l'intensité mesurée, au cours de l'étape b), sur ladite au moins une zone de la répartition spatiale et l'intensité prise en compte, au cours de l'étape c), dans la base de données sur ladite au moins une zone de la répartition spatiale sont chacune une intensité moyenne sur ladite zone considérée ;
- l'intensité mesurée, au cours de l'étape b), sur ladite au moins une zone de la répartition spatiale et l'intensité prise en compte, au cours de l'étape c), dans la base de données sur ladite au moins une zone de la répartition spatiale est une combinaison des coefficients de la décomposition de cette intensité dans une base constituée des différents modes de propagation ;
- la région active du capteur optique comprend une ou plusieurs couche(s) métallique(s), de sorte que ledit capteur optique constitue un capteur à effet plasmon ;
- la région active du capteur optique est constituée d'une ou plusieurs couche(s) diélectrique(s), de sorte que ledit capteur optique constitue un capteur interférométrique.

D'autres caractéristiques, buts et avantages de l'invention ressortiront à la lecture de la description faite en référence aux figures annexées données à titre d'exemple, et dans lesquelles :

- la figure 1 est un schéma d'une installation permettant de mettre en œuvre l'invention, selon un fonctionnement en réflexion ;
- la figure 2 est une vue agrandie d'une région active du capteur à effet plasmon utilisé dans l'installation de la figure 1;
- la figure 3 représente des résultats d'essais obtenus avec l'installation de la figure 1 ;
- la figure 4 est une vue agrandie, partielle, de la figure 3 ;
- la figure 5 est une image de l'extrémité de la fibre optique sur laquelle sont représentés plusieurs zones possibles de mesure ;
- la figure 6 représente l'évolution de l'intensité réfléchie par la région active du capteur à effet plasmon utilisé dans l'installation de la figure 1, normalisée à l'eau, en fonction d'une variation d'indice de réfraction, mais également d'un indice de réfraction, et pour chacune des zones de mesure définies par la figure 5 ;
- la figure 7 est une vue agrandie, sur une certaine gamme d'indices de réfraction, de la figure 6 ;
- la figure 8 est un schéma d'une autre installation permettant de mettre en œuvre l'invention, selon un fonctionnement en transmission ;
- la figure 9 est une vue agrandie d'une région active du capteur à effet plasmon de la figure 8 ;
- la figure 10 est une vue schématique représentant une région active d'un capteur optique de type résonateur et son environnement, apte à fonctionner en réflexion ;
- la figure 11 est une vue schématique représentant une région active d'un capteur optique de type résonateur et son environnement, apte à fonctionner en transmission.

Dans un premier mode de réalisation de l'invention, le procédé selon l'invention est un procédé de détection d'une variation locale d'indice de réfraction d'un milieu diélectrique situé à la surface d'un capteur à effet plasmon (capteur optique), le capteur à effet plasmon comportant à cet effet un guide d'onde comprenant une région, dite région active, recouverte d'au moins une couche métallique en contact avec le milieu diélectrique, le procédé comprenant les étapes suivantes :

- émettre un faisceau lumineux en entrée du guide d'onde de sorte que ce faisceau lumineux puisse se propager, au sein du guide d'onde, selon au moins N modes de propagation où N est un entier naturel tel que $N \geq 2$;
- mesurer l'intensité d'au moins une zone de la répartition spatiale de l'intensité du faisceau lumineux réfléchi par ladite région active du capteur à effet plasmon ; et
- détecter la variation locale de l'indice de réfraction du milieu diélectrique au moyen d'une base de données fournissant le lien entre l'intensité de ladite au moins une zone de la répartition spatiale de l'intensité du faisceau lumineux réfléchi par la région active du capteur à effet plasmon et une variation d'indice de réfraction par rapport à un milieu de référence.

Lorsque l'indice du milieu de référence est connu, la détermination de la valeur de la variation locale de l'indice de réfraction du milieu diélectrique permet alors d'obtenir la valeur de l'indice de réfraction du milieu diélectrique.

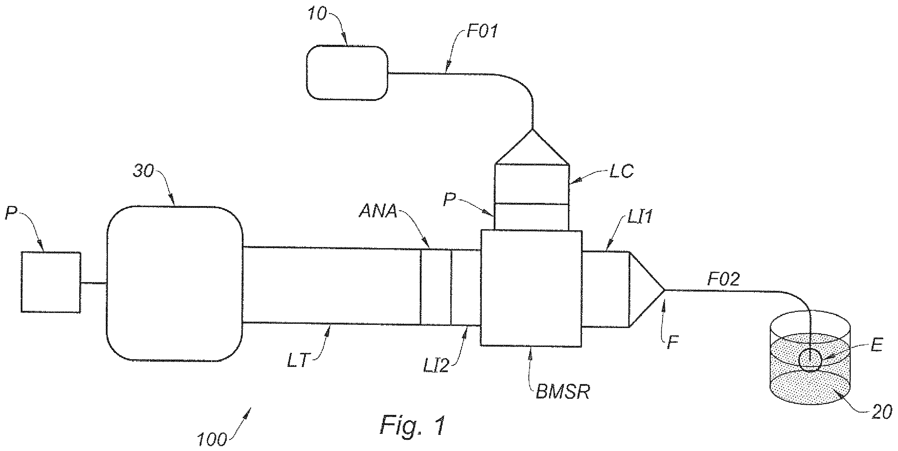

La figure 1 représente un schéma d'une installation expérimentale 100 apte à mettre en œuvre le procédé selon l'invention.

Dans le cas d'espèce, l'installation expérimentale 100 fonctionne en réflexion.

Cette installation expérimentale 100 comprend une source optique 10 apte à émettre un faisceau lumineux, en l'occurrence de longueur d'onde À donnée, dans une fibre optique FO1 (guide d'onde, utilisé comme source d'illumination), un ensemble de moyens pour conditionner le faisceau lumineux en direction d'une autre fibre optique FO2 (guide d'onde), qui est la fibre d'intérêt de l'installation, dont l'extrémité E est plongée dans une solution 20 comportant un milieu diélectrique, en l'occurrence liquide, ainsi qu'un moyen 30 pour mesurer, sur au moins une zone de l'autre extrémité F de la fibre optique FO2, la répartition spatiale de l'intensité de la lumière réfléchie par l'extrémité E, cette extrémité E de la fibre optique FO2 constituant la région active de cette fibre optique.

On comprend donc que le faisceau lumineux émis se propage au sein du guide d'onde vers la région active. Cette région active réfléchit le faisceau lumineux et le faisceau lumineux ainsi réfléchi présente une répartition spatiale de l'intensité. C'est cette répartition spatiale de l'intensité qui est mesurée, sur au moins une zone de l'extrémité F de la fibre optique FO2.

L'ensemble de moyens pour conditionner le faisceau lumineux en direction de la fibre optique FO2 est classique. Cet ensemble comprend plus précisément, une lentille de collimation LC, un polariseur P, un bloc miroir semi-réfléchissant BMSR, une lentille d'imagerie LI1 (à la sortie de laquelle on retrouve l'extrémité F de la fibre optique FO2), tous situés sur le chemin optique entre la source optique 10 et l'extrémité E de la fibre optique FO2.

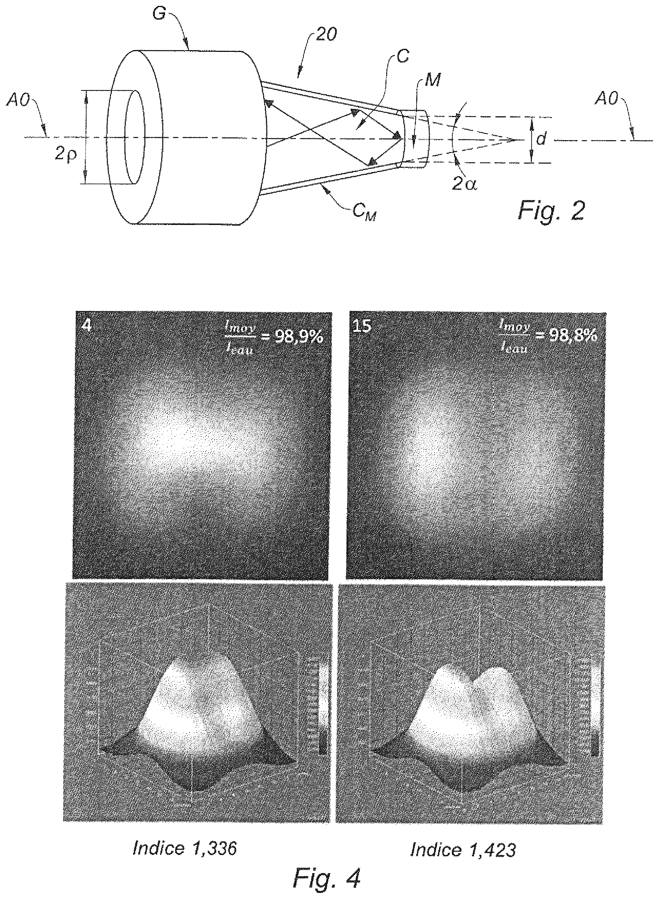

Les extrémités E et F de la fibre optique FO2 sont schématisées sur la figure 2. Sur cette figure 2, on note la présence de la gaine G, du cœur C dépourvue de gaine, de la couche métallique CM. On note également la présence de la solution 20 formant le milieu diélectrique.

Au niveau de la région active du capteur, le miroir M, tout comme la couche métallique CM, sont destinés à réfléchir le faisceau lumineux incident. C'est au niveau de la couche métallique CM que peut se produire le phénomène de résonance des plasmons de surface.

Le faisceau lumineux réfléchi est quant à lui destiné à revenir en arrière le long de la fibre optique FO2 jusqu'au bloc miroir semi-réfléchissant BMSR, à partir duquel il est guidé en direction du moyen 30. Un autre ensemble de moyens visant à conditionner le faisceau lumineux réfléchi est agencé entre le bloc miroir BMSR et le moyen 30. Cet autre ensemble de conditionnement comprend, de manière classique, une autre lentille d'imagerie LI2, un analyseur ANA et une lentille de tube LT.

Il convient de rappeler que dans le cas particulier où le guide d'onde est une fibre optique (cœur + gaine), le nombre de modes pouvant se propager dans la fibre optique dépend :

- du rayon p du cœur de la fibre optique (FO2) ;
- de l'ouverture numérique (O.N.) ; et
- de la longueur d'onde À du faisceau lumineux émis par la source optique 10.

L'ouverture numérique O.N peut s'exprimer sous la forme :

$$O.N. = \sqrt{n_G^2 - n_C^2}$$

où :

$n_C$ est l'indice de réfraction du cœur C ; et
$n_G$ est l'indice de réfraction de la gaine G.

Le nombre de modes de propagation se propageant dans une fibre optique peut être déterminé en se référant aux sections 36-12 et 36-13 du manuel « Optical Waveguide Theory », Allan W. Snyder and John D. Love, Chapman et Hall Ltd (2012), première publication en 1983 par Chapman et Hall Ltd, ISBN 0 412 09950 0 (cased), ISBN 0 412 24250 8 (Science Paperback).

Dans le cas d'espèce, la fibre optique FO2 a été choisie selon les caractéristiques définies dans Chigusa & al., « Properties of silica glass image fiber and its application », Optoelectronics Devices and Technologies, 1(2), pp. 203-216 (1986), dont le fournisseur est la société Fiber and Technology, cf. http://www.fibersandtechnology.com.

La fibre optique FO2 est telle qu'elle présente :

- un rayon de cœur d'environ $\rho \approx 1{,}5\mu m$,
- une ouverture numérique O.N. = 0,4

Par ailleurs, les tests menés avec cette installation expérimentale 10 ont été réalisés avec une source optique 10 émettant un faisceau lumineux :

- de longueur d'onde $\lambda$ = 590nm.

En fonction du rayon exact du cœur (variations liées à la fabrication), la fibre optique FO1, FO2 supporte 2 à 4 modes de propagation.

L'extrémité E de la fibre optique FO2, formant la région active du capteur à effet plasmon, est en l'occurrence en forme de cône tronqué. Au niveau du miroir M, le diamètre d de la fibre optique FO2 est d'environ $1{,}2\mu m$, ce qui correspond donc sensiblement au diamètre du miroir M. Le demi-angle a, défini par rapport à l'axe optique AO de la fibre optique FO2, au sommet du cône tronqué est d'environ 5° (on a représenté $2\alpha$ sur la figure 2).

Cette forme tronquée n'est pas nécessaire pour mettre en œuvre l'invention.

Cependant, une forme tronquée permet de limiter fortement les réflexions très nombreuses qui sinon ont lieu à l'extrémité E de la fibre optique FO2 et qui induisent des pertes susceptibles d'empêcher le retour de la lumière en sens opposé.

Ce cône tronqué a été fabriqué conformément aux enseignements fournis dans F. Deiss & al., « Nanostructured optical fibre arrays for high-density biochemical sensing and remote imaging », Analytical and Bioanalytical Chemistry, 396(1), pp. 53-71 (2010).

Puis, le cœur libre de gaine de la fibre optique FO2 a été recouvert par la couche métallique CM, en l'occurrence une couche d'accroché de titane (Ti) d'environ 5nm et une couche d'or (Au) selon une épaisseur de 50nm, sur toute sa surface latérale.

Le miroir M est quant à lui formé en déposant une couche d'or au niveau du sommet du cône tronqué, d'une épaisseur d'environ 500nm.

La source optique est une diode électroluminescente (DEL), en l'occurrence la M590F2 proposée par la société Thorlabs, émettant donc à une longueur d'onde de 590nm.

La fibre FO1 est une fibre SMA Fiber Patch Cable M35LO2, de longueur 2m, de diamètre 1000 microns, 0,39NA, Low OH.

Le moyen 30 pour mesurer l'intensité lumineuse réfléchie est une caméra, en l'occurrence de la société Hamatsu, modèle Orca 4.0. Elle est reliée à un processeur P apte à analyser l'image.

L'objectif d'imagerie LI1 est un Olympus X20, présentant une ouverture numérique de 0,4.

Avec l'installation expérimentale 100 telle que décrite précédemment, de nombreuses mesures ont été réalisées, en changeant d'une mesure à l'autre la nature de la solution formant le milieu diélectrique, les autres conditions restant identiques. La nature « diélectrique » de ces solutions est à prendre en considération par rapport au matériau métallique (Or, en l'occurrence) recouvrant le cœur de la fibre optique FO2.

Dans cet exemple, il s'agit d'une solution eau/glycérol dans laquelle la teneur en glycérol est modifiée d'une solution à l'autre pour changer ses propriétés optiques.

Le tableau 1 ci-dessous résume les propriétés des différentes solutions S1 à S17 testées, pour la longueur d'onde $\lambda$ = 590nm de la source optique 10 et une température T = 25°C, identiques à l'ensemble des tests.

Tableau 1

| Numéro de la solution | Degré de Brix (°Bx) | Indice de réfraction | Variation locale d'indice de réfraction de la solution par rapport au milieu de référence (solution 1) |
|---|---|---|---|
| 1 | 0 | 1,332 (eau pure) | 0 |

(suite)

| Numéro de la solution | Degré de Brix (°Bx) | Indice de réfraction | Variation locale d'indice de réfraction de la solution par rapport au milieu de référence (solution 1) |
|---|---|---|---|
| 2 | 0,7 | 1,333 | 0,001 |
| 3 | 1,2 | 1,334 | 0,002 |
| 4 | 2,5 | 1,336 | 0,004 |
| 5 | 5,9 | 1,341 | 0,009 |
| 6 | 9,5 | 1,346 | 0,014 |
| 7 | 11,8 | 1,350 | 0,018 |
| 8 | 12,3 | 1,350 | 0,018 |
| 9 | 14,5 | 1,354 | 0,022 |
| 10 | 17,4 | 1,360 | 0,028 |
| 11 | 25,8 | 1,373 | 0,041 |
| 12 | 27,7 | 1,377 | 0,045 |
| 13 | 35,2 | 1,390 | 0,058 |
| 14 | 40,8 | 1,402 | 0,07 |
| 15 | 51,2 | 1,423 | 0,091 |
| 16 | 54,5 | 1,430 | 0,098 |
| 17 | 60,1 | 1,442 | 0,11 |

L'influence de la teneur en glycérol est exprimée par l'intermédiaire du degré de Brix de la solution concernée, lequel sert à déterminer la fraction de saccharose dans un liquide.

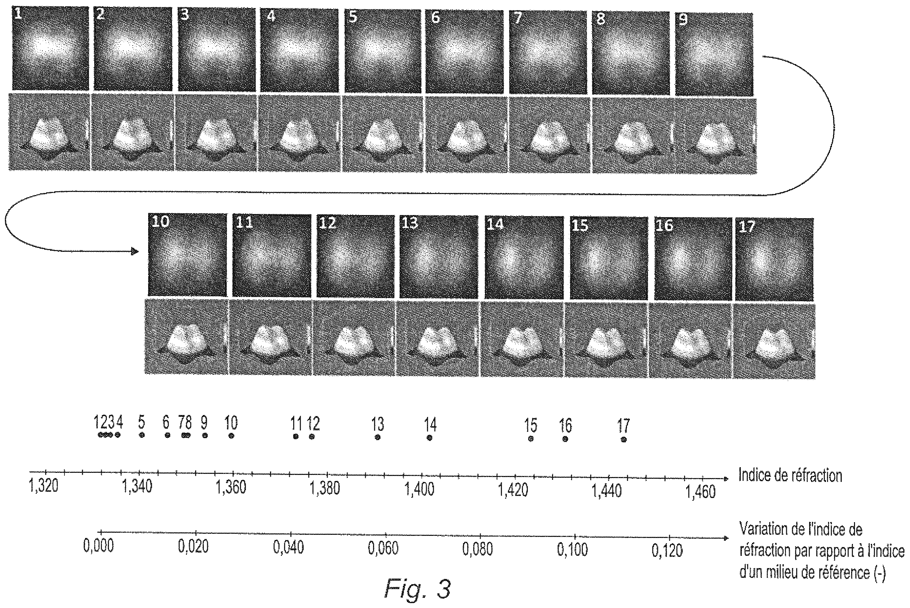

Les images de l'extrémité F fournies par la caméra sont données sur la figure 3.

Cette figure 3 montre plus précisément, pour chacune des solutions 1 à 17, l'image correspondante (représentative de ce qui se passe à l'extrémité E de la fibre FO2) qui est obtenue (en haut). Cette figure 3 montre également (en bas), le profil d'intensité correspondant. Ce profil d'intensité est obtenu grâce au logiciel plugin ImageJ® (3D Surface Plot). Grâce à ce logiciel, on peut obtenir plus aisément des valeurs quantitatives pour effectuer la mesure de la répartition spatiale de l'intensité du faisceau lumineux réfléchi par la région active du capteur.

On constate qu'en fonction de l'indice de réfraction de la solution, la répartition spatiale de l'intensité du faisceau lumineux réfléchi n'est pas la même.

Sur la figure 4, on a isolé les images 4 et 15 de la figure 3.

Il est intéressant de noter que si l'on mesure l'intensité globale réfléchie ($I_{global}$), la différence entre les images 4 et 15 est très faible (on compare les deux images du haut). En effet, la quantité $I_{global}/I_{eau}$, qui représente l'intensité globale réfléchie normalisée à l'eau, est de 98,9% sur la figure 4 pour un indice de réfraction de 1,336 alors que cette même quantité $I_{global}/I_{eau}$ est de 98,8% pour un indice de réfraction de 1,423. Il est donc difficile, dans ce cas, d'associer à une mesure globale de l'intensité réfléchie, une valeur précise de l'indice de réfraction. Cela dénote une sensibilité du capteur qui est relativement faible. Au contraire, en comparant la répartition spatiale de cette intensité pour les figures 4 et 15 (on compare les deux images du bas), on relève des profils (c'est-à-dire des répartitions spatiales de l'intensité réfléchie) très différents.

Pour encore mieux représenter l'intérêt d'effectuer une mesure de la répartition spatiale de l'intensité réfléchie, une mesure de l'intensité réfléchie normalisée à l'eau a été effectuée pour chacune des 17 solutions du tableau 1 et pour chaque solution, sur trois zones distinctes de la répartition spatiale de l'intensité réfléchie par la région active de la fibre optique.

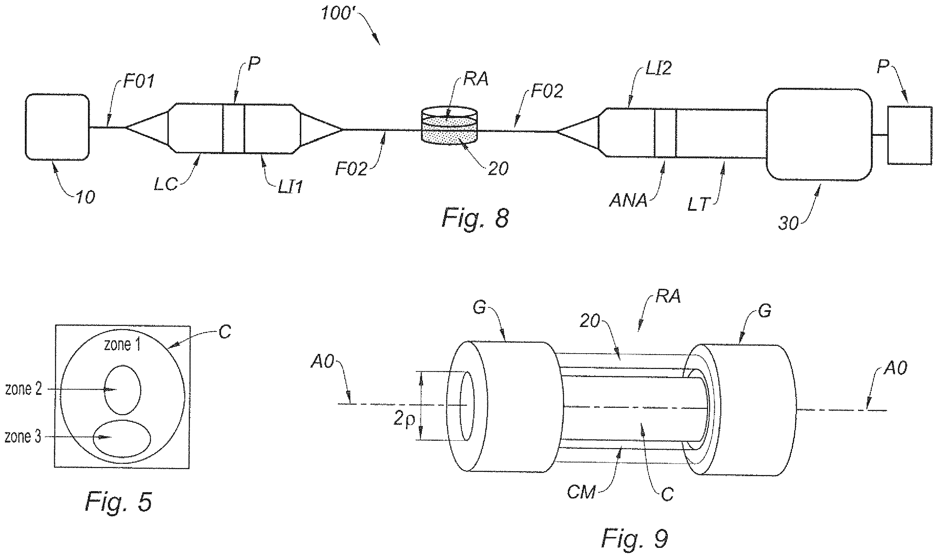

Ces trois zones sont représentées sur la figure 5.

La zone 1 définit la région correspondant à la totalité de la répartition spatiale de l'intensité réfléchie sortant de la fibre optique. Sur cette région, on a donc accès à une mesure globale (moyenne), qui permet donc d'avoir accès à l'intensité globale réfléchie, normalisée à l'eau. On comprend que l'intensité globale réfléchie intègre la totalité de la répartition spatiale de l'intensité. Cette mesure sert de référence et ne fait pas l'objet de l'invention.

La zone 2 définit une zone de la répartition spatiale d'intensité localisée sur la zone centrale du cœur de fibre.

Quant à la zone 3, elle définit une autre zone de la répartition spatiale de l'intensité réfléchie localisée sur une zone périphérique du cœur de fibre.

On comprend que la zone 2 et la zone 3, qui sont localisées, ne prennent en compte qu'une partie de la répartition spatiale de l'intensité, du fait tout simplement que la zone 2 et la zone 3 ne forment q'une partie de la zone 1.

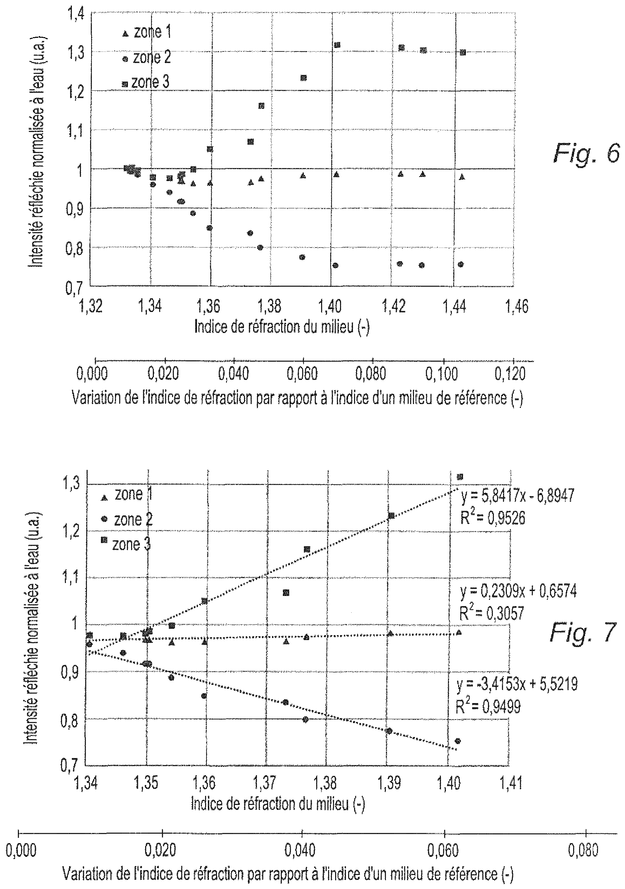

Les résultats obtenus sont représentés sur la figure 6.

Sur cette figure 6, on constate que les variations d'intensité réfléchie sont bien plus importantes pour les zones de mesure localisées (zone 2, zone 3) que pour la zone de mesure globale (zone 1).

A partir des données de cette figure 6, la sensibilité S du capteur a été déterminée.

La sensibilité S est définie par la relation :

$$S = \frac{\Delta I / I_{eau}}{\Delta n}$$

où :

$I_{eau}$ est l'intensité réfléchie mesurée, sur la même zone considérée, lorsque l'extrémité E de la fibre optique FO2 est plongée dans de l'eau pure, servant de milieu de référence (solution 1) ;

$\Delta I / I_{eau}$ est la variation d'intensité réfléchie mesurée par le capteur, normalisée à l'eau (en %, ou comme c'est le cas ici en unité arbitraire a.u.); et

$\Delta n$ est la variation locale d'indice de réfraction du milieu diélectrique (exprimé en RIU pour « Refractive Index Unit » selon la terminologie anglo-saxonne).

Ces données sont représentées sur la figure 7, pour des valeurs d'indice de réfraction de la solution comprises entre 1,34 et 1,41 (solutions 5 à 14). En ordonnées, on a donc la quantité $\Delta I / I_{eau}$ et en abscisses (outre l'indice de réfraction), la variation locale de l'indice de réfraction par rapport à l'indice du milieu de référence (solution 1).

On comprend que pour chacune des zones 1, 2 et 3, on détermine la quantité $\Delta I$ comme étant une variation de l'intensité moyenne sur la zone d'observation considérée.

Pour la zone 1, on obtient une sensibilité de 23%/RIU. Pour la zone 2, on obtient une sensibilité de -341%/RIU. Enfin, pour la zone 3, on obtient une sensibilité de 584%/RIU. En d'autres termes, en fonction du choix de la zone de mesure, il est possible d'améliorer la sensibilité du capteur d'un facteur 25 (comparaison zone 3/zone 1).

L'approche proposée dans le cadre de l'invention n'est pas basée sur une conception particulière d'une fibre optique formant capteur à effet plasmon. En conséquence, l'amélioration de la sensibilité est valable pour tout capteur optique réalisé sur un guide d'onde admettant au moins deux modes de propagation.

Dans le cadre de l'invention, la demanderesse s'est en effet aperçue d'une part qu'un changement d'indice de réfraction avait un effet sur la répartition spatiale de l'intensité du faisceau lumineux réfléchi et d'autre part, que la connaissance de cette répartition spatiale permettait d'augmenter la sensibilité du capteur, sans modification structurelle du capteur.

D'après les connaissances de la demanderesse, ceci n'a jamais été constaté à ce jour.

En particulier, dans le document D1, on travaille avec un seul mode de propagation et de fait, on ne fait que mesurer l'intensité globale réfléchie par la région active du capteur.

Dans le cadre de l'invention, et contrairement à l'art antérieur, on mesure la répartition spatiale sur la zone considérée de l'extrémité F de la fibre optique FO2 de l'intensité réfléchie par la région active E de cette même fibre optique.

Cela permet de montrer le lien entre une variation locale d'indice de réfraction du milieu diélectrique et une forme particulière de la répartition spatiale de l'intensité lumineuse réfléchie par la région active.

Cela permet aussi de construire une base de données fournissant le lien entre l'intensité de ladite au moins une zone de la répartition spatiale de l'intensité du faisceau lumineux réfléchi par la région active du capteur à effet plasmon et une variation d'indice de réfraction par rapport au milieu de référence.

Les données du tableau 1 sont un exemple d'une base de données utilisable dans le cadre de l'invention pour accéder, non seulement à la détection d'une variation locale d'indice de réfraction, mais plus précisément à la détermination de la valeur d'une variation locale d'indice de réfraction (voire même à la détermination de l'indice local si l'on dispose d'un milieu de référence d'indice de réfraction connu).

En utilisation, on ne connaît pas a priori la variation locale d'indice de réfraction du milieu diélectrique. Cependant, on peut mesurer la répartition spatiale de l'intensité lumineuse réfléchie avec une installation conforme à l'installation expérimentale 100, et en déduire, grâce à la base de données préalablement construite, la variation locale d'indice de réfraction du milieu diélectrique testé, par rapport au milieu de référence, pour déduire les caractéristiques de ce milieu diélectrique.

Ainsi et par exemple, en utilisation, si l'on obtient un profil d'intensité conforme à l'image 4 (solution 4 du tableau 1) de la figure 3, on en déduit une variation d'indice de 0,004 par rapport au milieu de référence. En pratique, cela permet par exemple de quantifier un analyte présent dans le milieu diélectrique (ex. : dosage du sucre dans un sirop).

Selon un autre exemple, après fonctionnalisation spécifique de la région active, il suffit de détecter la variation locale d'indice de réfraction du milieu diélectrique induite par la reconnaissance biologique (ex. : anticorps/analyte) pour qualifier la présence de l'analyte.

Cependant, on peut connaître l'indice de réfraction de ce milieu diélectrique, si l'on connaît l'indice de réfraction d'un milieu de référence.

C'est le cas avec les tests réalisés, puisque l'on a fait un test préalable (mesure) avec de l'eau pure pour déterminer la valeur de l'indice de réfraction du milieu de référence. En effet, en utilisation, en sommant la variation locale de l'indice de réfraction du milieu diélectrique testé (propriétés initialement inconnues) à l'indice de réfraction du milieu de référence, on obtient l'indice de réfraction du milieu diélectrique testé.

Cependant, il faut bien voir que la connaissance de l'indice de réfraction du milieu de référence (cf. tests ci-dessus) n'est pas obligatoire, tant pour construire la base de données qu'en utilisation, c'est-à-dire lorsque l'on cherche à déterminer la variation d'indice de réfraction d'un milieu diélectrique inconnu.

En effet, l'évolution de la répartition spatiale de l'intensité réfléchie par la région active sur la zone considérée est caractéristique des variations locales d'indice de réfraction du milieu testé.

Par ailleurs, il faut bien comprendre qu'il y a différentes façons de construire une base de données utilisable dans le cadre de l'invention.

Dans le tableau, on se base sur une variation de la teneur en glycérol dans l'eau (° de Brix).

Pour autant, on peut procéder autrement.

Ainsi, pour construire une telle base de données, on pourra plus généralement générer des variations connues d'indice de réfraction d'un milieu diélectrique, qui seront associées à des répartitions spatiales spécifiques de l'intensité réfléchie.

A titre d'exemple, on peut ajouter du sel, à la place du glycérol, dans de l'eau. Selon un autre exemple, on peut chauffer ou refroidir la solution à base d'eau, l'indice de réfraction dépendant, selon une relation connue de la température.

En outre, le milieu de référence n'est pas obligatoirement de l'eau.

Il peut notamment s'agir du milieu testé, dans des conditions connues (température, pression ou encore pH) ou à un instant donné, par exemple lorsque le milieu diélectrique que l'on cherche à tester est mis au contact avec la région active du capteur optique.

En outre, la base de données peut être simplifiée et en conséquence ne pas donner systématiquement accès à une valeur d'une variation locale d'indice de réfraction. En effet, il est tout à fait envisageable de construire une base de données de type tout ou rien, à savoir qui fournit une information de type « détection » ou « non détection » en fonction de l'intensité de ladite au moins une zone de la répartition spatiale de l'intensité du faisceau lumineux réfléchi par la région active du capteur à effet plasmon.

En bref, la base de données peut être construite de multiples façons. Ce qui importe, c'est de pouvoir faire un lien nécessaire et suffisant entre une variation d'indice de réfraction du milieu diélectrique testé, que la valeur de cette variation soit déterminée ou non, et une répartition particulière de l'intensité réfléchie.

Comme on peut le constater sur les tests présentés précédemment (figure 3 par exemple), la répartition spatiale de l'intensité lumineuse réfléchie ou transmise par la région active du capteur à effet plasmon se présente sous la forme d'une répartition sur une surface plane. Ceci est lié à l'utilisation de la caméra 30. On pourrait toutefois observer cette répartition spatiale autrement, c'est-à-dire pas sur une surface plane, mais par exemple à partir de l'angle solide autour de l'axe optique.

D'autres modes de réalisation sont envisageables.

En particulier, un procédé selon l'invention peut tout à fait fonctionner en transmission.

Ainsi, dans un deuxième mode de réalisation de l'invention, le procédé selon l'invention est un procédé de détection d'une variation locale d'indice de réfraction d'un milieu diélectrique situé à la surface d'un capteur à effet plasmon (capteur optique), le capteur à effet plasmon comportant à cet effet un guide d'onde comportant une région, dite région active, recouverte d'au moins une couche métallique en contact avec le milieu diélectrique, le procédé comprenant les étapes suivantes :

- émettre un faisceau lumineux en entrée du guide d'onde de sorte que ce faisceau lumineux puisse se propager, au sein du guide d'onde, selon au moins N modes de propagation où N est un entier naturel tel que $N \geq 2$;
- mesurer l'intensité d'au moins une zone de la répartition spatiale de l'intensité du faisceau lumineux transmis par ladite région active du capteur à effet plasmon; et
- détecter la variation locale de l'indice de réfaction du milieu diélectrique au moyen d'une base de données fournissant le lien entre l'intensité de ladite au moins une zone de la répartition spatiale de l'intensité du faisceau lumineux transmis par la région active du capteur à effet plasmon et une variation d'indice de réfraction par rapport à un milieu de référence.

Une installation 100' permettant de mettre en œuvre le procédé selon ce deuxième mode de réalisation est schématisée sur la figure 8 et une vue agrandie sur la région active RA est représentée sur la figure 9.

La figure 8 (transmission) est à comparer à la figure 1 (réflexion).

La figure 9 (transmission) est à comparer à la figure 2 (réflexion).

Sur ces figures 8 et 9, les références identiques aux figures 1 et 2, respectivement, désignent les mêmes composants.

En transmission, il n'y a plus de bloc miroir semi-réfléchissant. Par ailleurs, la région active RA ne forme pas une extrémité de la fibre FO2, mais en forme une partie, par ailleurs non tronquée. En transmission, on comprend donc que le faisceau lumineux émis se propage au sein du guide d'onde vers la région active. Cette région active transmet le faisceau lumineux et le faisceau lumineux ainsi transmis présente une répartition spatiale de l'intensité. C'est cette répartition spatiale de l'intensité qui est mesurée. Pour le reste, la description faite pour le premier mode de réalisation, et en particulier les modalités de conception, sont les mêmes.

Dans les deux modes de réalisation décrits précédemment, le capteur à effet plasmon emploie au moins une couche métallique CM. Cette couche métallique CM peut être une couche classique (dans la masse). L'effet plasmon est alors un effet plasmon de surface.

Cependant, il peut également en variante, s'agir d'une couche nanostructurée, par exemple une couche formée à partir de nanoparticules métalliques, et en particulier de nanoparticules d'or (AU). L'effet plasmon est alors un effet plasmon localisé à la surface des nanoparticules. Ici, on peut alors prévoir une fonctionnement en réflexion (conformément aux schémas de la figure 1 et de la figure 2 pour le cas tronqué, mais le cas non tronqué est envisageable également) ou un fonctionnement en transmission (conformément aux figures 8 et 9, par exemple).

On pourra par exemple se référer à l'article « Wavelength-based localized surface plasmon resonance optical fiber biosensor, CAO Jie & al., Sensors and Actuators B : Chemical, 2013, vol. 181, pp. 611-619.

Il convient de noter que l'emploi d'un capteur à effet plasmon en tant que capteur optique, qu'il fonctionne en réflexion ou en transmission, n'est pas la seule façon d'atteindre l'objectif visé par l'invention.

En effet, on peut employer d'autres types de capteurs optiques.

Ainsi, on peut employer un capteur optique de type interférométrique.

Dans ce cas, et par rapport à un capteur à effet plasmon, il convient de prévoir au moins une couche diélectrique, à la place de ladite au moins une couche métallique CM. Avantageusement, on prévoira plusieurs couches diélectriques et ce pour une meilleure efficacité.

Ainsi, en réflexion on pourra remplacer la couche CM de la figure 2 par au moins une couche diélectrique pour obtenir un capteur interférométrique. Cela vaut également lorsque l'extrémité de la fibre optique ou plus généralement du guide d'onde n'est pas tronquée.

Le schéma de la figure 1 reste identique dans le cas où, en réflexion, le capteur à effet plasmon est remplacé par un capteur interférométrique.

Ainsi également, en transmission, on pourra remplacer la couche CM de la figure 9 par au moins une couche diélectrique pour obtenir un capteur interférométrique.

Le schéma de la figure 8 reste identique dans le cas où, en transmission, le capteur à effet plasmon est remplacé par un capteur interférométrique.

On pourra par exemple se référer à l'article « A rapid method for determining dynamic binding capacity of resins for the purification of proteins », Protein expression and purification, 2008, vol. 60, 2, pp. 147-150.

Dans une autre variante, on peut employer un capteur optique de type résonateur.

D'un point de vue structurel, cette démarche revient à ajouter au moins un autre guide d'onde GO, en forme d'anneau par exemple, à proximité d'une région sans gaine du guide d'onde FO2, de sorte que la surface de cet autre guide d'onde GO soit en contact avec le milieu diélectrique, à caractériser. Par « forme en anneau », il convient de comprendre une forme bouclée sur elle-même. En d'autres termes, l'anneau peut présenter différentes formes, notamment et à titre d'exemples non limitatifs de cercle ou d'ellipse.

L'autre guide d'onde GO est destiné à former un résonateur. La région active RA de l'ensemble formé par le guide d'onde FO2 et l'autre guide d'onde GO est constitué par cet autre guide d'onde GO (GO = RA = région active).

D'un point de vue pratique, un tel ensemble est réalisé, non pas avec des fibres optiques mais sur des supports solides pour des raisons de stabilité mécanique.

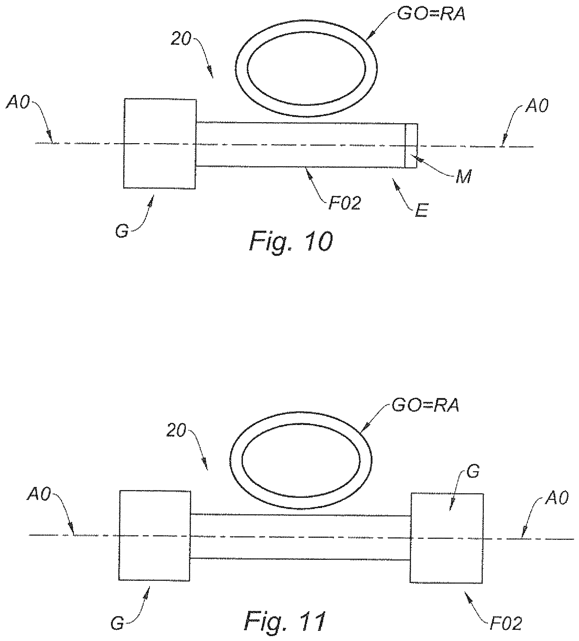

Cette configuration est représentée sur la figure 10 dans le cas d'un fonctionnement en réflexion (présence du miroir). En réflexion, l'installation 100 représentée sur la figure 1 peut être employée avec le capteur à résonateur.

Cette configuration est également représentée sur la figure 11 dans le cas d'un fonctionnement en transmission. En transmission, l'installation 100' représentée sur la figure 8 peut être employée avec le capteur à résonateur.

En fonctionnement, et sous certaines conditions, il peut exister un couplage entre les guides d'onde FO2 et GO qui se traduit, dans le premier guide d'onde FO2, par une variation de l'intensité lumineuse réfléchie ou transmise.

En d'autres termes, le résonateur (guide d'onde GO) remplit ici la fonction remplie par ladite au moins une couche métallique CM d'un capteur à effet plasmon ou la fonction remplie par ladite au moins une couche diélectrique.

On pourra se référer à l'article de Luchansky & al. « High-Q optical sensors for chemical and biological analysis », Analytical chemistry, 2011, vo. 84 (2), pp. 793-821. On pourra également se référer à l'article de Kim & al., « Integrated photonic glucose biosensor using a vertically coupled microring resonator in polymers », Optics Communications, 2008, vo. 281 (18), pp. 4644-4647.

Ainsi, dans cette variante de réalisation, l'invention est relative à un procédé de détection d'une variation locale d'indice de réfraction d'un milieu diélectrique situé à la surface d'un capteur optique, le capteur optique comportant à cet effet un guide d'onde faisant face à un autre guide d'onde, cet autre guide d'onde formant résonateur et constituant une région, dite région active, en contact avec le milieu diélectrique, le procédé comprenant les étapes suivantes :

- émettre un faisceau lumineux en entrée du guide d'onde de sorte que ce faisceau lumineux puisse se propager, au sein du guide d'onde, selon au moins N modes de propagation où N est un entier naturel tel que $N \geq 2$ ;
- mesurer l'intensité d'au moins une zone de la répartition spatiale de l'intensité du faisceau lumineux réfléchi ou transmis par cette région active ; et
- détecter la variation locale de l'indice de réfraction du milieu diélectrique au moyen d'une base de données fournissant le lien entre l'intensité de ladite au moins une zone de la répartition spatiale de l'intensité du faisceau lumineux réfléchi ou transmis par la région active du capteur optique et une variation d'indice de réfraction par rapport à un milieu de référence.

Dans les tests décrits ci-dessus, le nombre de modes de propagation du faisceau lumineux est faible, en l'occurrence compris entre 2 et 4. La demanderesse estime que le procédé conforme à l'invention décrit précédemment, selon les modes de réalisation décrits précédemment, peut être mis en œuvre sans difficultés pour un nombre N de modes de propagation réduit, par exemple pour N < 10 que ce soit avec l'installation 100 de la figure 1 ou avec l'installation 100' de la figure 8.

Même si cela n'est pas obligatoire, pour un nombre de modes de propagation important, par exemple pour N≥ 10, on peut avoir intérêt à sélectionner les modes de propagation dans la fibre optique utiles pour générer l'effet que l'on cherche à identifier (diminution où augmentation de l'intensité réfléchie ou transmise, quel que soit le moyen de transduction utilisé : effet plasmon, interférométrie, etc...). En effet, dans certains cas, plusieurs modes de propagation sont confinés au centre du cœur de la fibre optique si bien que l'énergie de ces modes qui atteignent la région active n'est pas suffisante pour générer un effet mesurable. Par exemple, dans le cas d'un capteur à effet plasmon, ces modes sont simplement réfléchis par le miroir en bout de fibre ou transmis, sans générer d'effet plasmon au niveau de la région active.

Dans certains cas, il peut alors être difficile de détecter correctement les différents modes de propagation.

C'est pourquoi, dans de tels cas, une solution consiste à ne conserver que les modes de propagation susceptibles de générer un effet détectable. Il s'agit des modes de propagation les plus périphériques, c'est-à-dire les plus éloignés du centre de la fibre optique donc qui ont la plus forte inclinaison par rapport à l'axe optique de la fibre optique FO2.

En pratique, on peut remplacer, sur le schéma de la figure 1 ou celui de la figure 8, la lentille de collimation LC par un objectif « fond noir ». Un objectif « fond noir » est un objectif présentant un diaphragme opaque, i.e. ne laissant pas passer le faisceau lumineux, en son centre. De ce fait, les modes de propagation les plus centraux sont stoppés et seuls les modes les plus périphériques sont transmis au-delà de l'objectif « fond noir ». Puis, quand le faisceau lumineux continue son chemin, seuls les modes de propagation susceptibles d'être modifiés par la région active arrivent au niveau de la région active du capteur. La région active du capteur ne voit donc qu'un nombre réduit de modes de propagation et une analyse de la répartition spatiale de l'intensité réfléchie ou transmise peut alors être effectuée comme décrit précédemment.

Une telle modification est peu coûteuse.

L'utilisation d'un objectif « fond noir » en lieu et place de la lentille de collimation LC n'est pas la seule possibilité.

Ainsi, on peut utiliser l'approche proposée par M. Kreysing & al., « Dynamic operation of optical fibers beyond the single-mode regime facilitates the orientation of biological cells », Nature Communications 5, Article Number :5481 doi/10.1038/ncomms6481. Par rapport à l'installation de la figure 1 ou de la figure 8, cela revient à remplacer la source optique 10, la fibre optique FO1 associée ainsi que la lentille de collimation LC, par le système d'injection de la lumière qui est proposé dans cet article. Là également, la région active du capteur optique ne voit donc qu'un nombre réduit de modes de propagation et une analyse de la répartition spatiale de l'intensité réfléchie ou transmise par la région active peut alors être effectuée comme décrit précédemment.

Qu'on mette en œuvre un objectif « fond noir » ou qu'on s'appuie sur ce qui est proposé par Kreysing & al., on réalise donc, après avoir émis le faisceau lumineux et avant de réaliser une analyse de la répartition spatiale de l'intensité lumineuse réfléchie ou transmise par la région active du capteur, une étape additionnelle consistant à filtrer au plus N-1 modes de propagation, ce filtrage s'effectuant sur le ou les modes les moins susceptibles d'être modifiés par la région active. Ce filtrage revient à réaliser une atténuation partielle ou totale du ou des modes les moins susceptibles d'être modifiés par la région active. Au final, après ce filtrage, il restera toujours au moins deux modes de propagation qui pourront servir de base pour réaliser l'analyse de la répartition spatiale de l'intensité lumineuse réfléchie ou transmise par la région active du capteur.

Une autre solution est de prévoir, en lieu et place de la caméra, un moyen 30 formé par un spectrophotomètre. Les données fournies par le spectrophotomètre sont alors traitées pour identifier les modes de propagation ayant été modifiés par la région active du capteur. Ce traitement peut être basé sur la méthode proposée par J.W. Nicholson & al., « Spatially and spectrally resolved imaging of modal content in large-mode-area fibers », Optics Express, vol. 16(10), pp. 7233-7243 (2008).

Dans cet article, on part du principe que l'intensité globale $I_{global}$ est une combinaison linéaire des intensités $I_i$ de chaque mode de propagation, avec $1 \leq i \leq N$, la contribution en intensité de chaque mode de propagation étant pondérée par un coefficient réel $\alpha_i$.

On a alors la relation $$I_{global} = \sum_{i=1}^{N} \alpha_i I_i.$$

Les coefficients $\alpha_i$ peuvent être déterminés par la méthode proposée par Nicholson.

Appliqué dans le cadre de l'invention, il s'agit de déterminer et de comparer les valeurs des coefficients $\alpha_i$ obtenus pour différents milieux diélectriques. Cela permet d'éliminer les modes de propagation n'ayant pas été modifié par la région active. En effet, que l'on travaille en réflexion ou en transmission, les modes de propagation ayant été modifiés par la région active (par exemple ayant subi un effet plasmon) sont les modes dont le coefficient $\alpha_i$ a une plus grande variation par rapport à l'indice de réfraction du milieu. Les autres modes de propagation ont au contraire une variation faible de leurs coefficients $\alpha_i$. Cela permet également d'associer à chaque milieu diélectrique une série de coefficients caractéristiques des indices de ces milieux diélectriques. La détermination de ces coefficients $\alpha_i$ revient alors à réaliser l'analyse de la répartition spatiale de l'intensité réfléchie ou transmise.

Ainsi, l'intensité mesurée, au cours de l'étape b), sur ladite au moins une zone de la répartition spatiale et l'intensité prise en compte, au cours de l'étape c), dans la base de données sur ladite au moins une zone de la répartition spatiale est ici une combinaison des coefficients de la décomposition de cette intensité dans une base constituée des différents modes de propagation.

Contrairement aux solutions basées sur ce qui est proposé dans Kreysing & al., le filtrage s'effectue en aval de la région active du capteur. En d'autres termes, dans ce cas, l'étape additionnelle est réalisée en aval, en référence au sens de parcours du faisceau lumineux dans le guide d'onde formant capteur optique, de la région active du capteur pour assurer un filtrage au moins sur le ou les modes n'ayant pas interagi avec la région active.

Néanmoins, le but est bien le même, à savoir de pouvoir connaître la répartition spatiale de l'intensité lumineuse réfléchie ou transmise dans de bonnes conditions.

Encore une autre possibilité est de produire, au niveau de la source de lumière et au cours de l'étape a) des fronts d'ondes de la lumière envoyée dans la fibre optique qui sont structurés pour induire des excitations préférentielles sur des zones ou sous-régions particulières, plus précisément sur au moins deux zones ou sous-régions distinctes, de l'extrémité E (région active) de la fibre optique.

Le principe pour obtenir une telle excitation de l'extrémité E de la fibre optique FO2 est décrit par Loterie & al., « Digital confocal microscopy through a multimode fiber », Optics express, 2015, vol. 23 (18), pp. 23845-23858.

Il convient de noter que cette approche s'applique en réflexion (figure 1) et en transmission (figure 8) uniquement pour un capteur optique à effet plasmon ou interférométrique. Le cas d'un fonctionnement avec un capteur de type résonateur est exclu.

En effet, l'idée est ici d'éclairer spécifiquement et de préférence successivement au moins deux zones distinctes de l'extrémité E, formant région active, de la fibre optique FO2 d'intérêt.

Cette approche peut tout particulièrement être mise en œuvre avec une fibre optique véhiculant un nombre élevé de modes, par exemple N > 10. En effet, dans ce cas, on peut identifier plus aisément au moins deux zones plus éclairées sur l'extrémité E de la fibre optique FO2, du fait que plusieurs modes de propagation contribuent à éclairer plus ces zones que d'autres sur l'extrémité E de la fibre optique FO2.

En pratique, cette approche peut permettre d'obtenir une information spatiale sur la localisation de molécules ou de particules (virus, bactéries, cellules...) et ce, à l'échelle de l'extrémité de la fibre optique. Cette approche peut aussi permettre, si l'extrémité E de la fibre optique a été au préalable fonctionnalisée différemment (par exemple anticorps A et anticorps B) au niveau desdites zones, de qualifier la présence d'un analyte particulier.

L'invention est applicable à tout guide d'onde susceptible de former un capteur optique. Comme pour le cas particulier de la fibre optique, le nombre de modes pouvant se propager dans un guide d'onde peut être défini à partir de sa géométrie, de l'ouverture numérique et de la longueur d'onde du faisceau lumineux.

Un exemple de guide d'onde qui n'est pas une fibre optique mais qui pourrait être utilisé dans le cadre de l'invention est un substrat sur silicium. Un exemple d'un tel substrat est proposé par M. Kawachi, « Silica waveguides on silicon and their application to integrated-optic components », Optical and Quantum Electronics, col. 22(5), pp. 391-416 (1990). Avec un tel guide d'onde, l'intérêt supplémentaire réside dans le fait qu'il est alors en outre possible de réaliser un composant optique intégré.

On notera également que l'invention est applicable pour tout milieu diélectrique M, liquide ou gazeux, notamment dans les biocapteurs et les capteurs chimiques.

Elle peut donc être employée lorsque le capteur est une langue électronique (milieu diélectrique = liquide) ou d'un nez électronique (milieu diélectrique = gaz).

Enfin, il convient de noter que l'invention est également applicable à tout assemblage de plusieurs guides d'onde disposés côte à côte, c'est-à-dire en parallèle les uns des autres. On peut alors former un multi-capteurs optique. Comme pour le cas particulier des assemblages de fibres optique (fibres multi cœurs...), l'invention présente dans ce cadre un intérêt majoré. En effet, cette configuration de multi-capteurs optique est particulièrement pertinente dans le domaine des biocapteurs car les analyses en longueurs d'ondes sont très complexes à mettre en œuvre. Les analyses en intensités sont souvent la seule option réalisable. Le gain en sensibilité permis par l'invention peut alors facilement être exploité.

Dans ce cas (multi-capteurs), le capteur optique comporte soit plusieurs guides d'onde disposés en parallèle (cf. figures 1, 2, 8 et 9 avec plusieurs guides d'ondes mis en parallèle) et comprenant chacun une région, dite région active, recouverte d'au moins une couche métallique et/ou diélectrique en contact avec le milieu diélectrique, soit plusieurs guides d'onde disposés en parallèle (figures 10 et 11 avec plusieurs fguides d'ondes mis en parallèle) et faisant chacun face à un autre guide d'onde, chaque dit un autre guide d'onde formant résonateur et constituant une région, dite région active, en contact avec le milieu diélectrique, lesdites étapes a), b) et c) étant mises en œuvre pour chacun desdits guides d'onde.

## Revendications

1. Procédé de détection d'une variation locale d'indice de réfraction d'un milieu diélectrique situé à la surface d'un capteur optique, le capteur optique comportant à cet effet soit un guide d'onde comprenant une région, dite région active, recouverte d'au moins une couche métallique et/ou diélectrique en contact avec le milieu diélectrique, soit un guide d'onde faisant face à un autre guide d'onde, cet autre guide d'onde formant résonateur et constituant une région, dite région active, en contact avec le milieu diélectrique, le procédé comprenant les étapes suivantes :

   a) émettre un faisceau lumineux en entrée du guide d'onde de sorte que ce faisceau lumineux puisse se propager, au sein du guide d'onde, selon au moins N modes de propagation où N est un entier naturel tel que $N \geq 2$, en direction de la région active ;
   le faisceau lumineux réfléchi ou transmis par la région active présentant ainsi une répartition spatiale donnée de l'intensité ;
   b) mesurer, sur au moins une zone de la répartition spatiale de l'intensité du faisceau lumineux réfléchi ou transmis par ladite région active du capteur optique qui ne prend en compte qu'une partie de cette répartition spatiale, l'intensité sur ladite au moins une zone ; et
   c) détecter la variation locale de l'indice de réfraction du milieu diélectrique au moyen d'une base de données fournissant le lien entre l'intensité de ladite au moins une zone de la répartition spatiale de l'intensité du faisceau lumineux réfléchi ou transmis par la région active du capteur optique et une variation d'indice de réfraction par rapport à un milieu de référence.

2. Procédé selon la revendication 1, dans lequel la détection réalisée à l'étape c) consiste à déterminer la valeur de la variation locale de l'indice de réfraction du milieu diélectrique.

3. Procédé selon la revendication précédente, dans lequel on met en œuvre une étape consistant à déterminer la valeur de l'indice de réfraction du milieu de référence puis, après avoir déterminé la valeur de la variation locale de l'indice de réfraction du milieu diélectrique au cours de l'étape c), à déterminer la valeur de l'indice de réfraction du milieu diélectrique.

4. Procédé selon l'une des revendications précédentes, dans lequel entre l'étape a) et l'étape b), on réalise une étape additionnelle consistant à filtrer au plus N-1 modes de propagation, ce filtrage s'effectuant sur le ou les modes les moins susceptibles d'être modifiés par la région active ou n'ayant pas été modifiés par la région active.

5. Procédé selon la revendication précédente, dans lequel ladite étape additionnelle est réalisée en amont, en référence au sens de parcours du faisceau lumineux dans le guide d'onde, de la région active du capteur optique pour assurer un filtrage sur le ou les modes les moins susceptibles d'être modifiés par la région active.

6. Procédé selon la revendication précédente, dans lequel ladite étape additionnelle est réalisée au moyen d'un objectif « fond noir », à savoir d'un objectif présentant un diaphragme opaque en son centre.

7. Procédé selon la revendication 4, dans lequel ladite étape additionnelle est réalisée en aval, en référence au sens de parcours du faisceau lumineux dans le guide d'onde, de la région active du capteur optique pour assurer un filtrage au moins sur le ou les modes n'ayant pas été modifiés par la région active.

8. Procédé selon l'une des revendications précédentes, dans lequel le guide d'onde est une fibre optique.

9. Procédé selon la revendication précédente, dans lequel le procédé étant mis en œuvre en réflexion, la région active du capteur optique, qui est donc la région active de la fibre optique, présente une forme de cône tronqué à l'extrémité duquel est situé un miroir.

10. Procédé selon l'une des revendications précédentes, dans lequel l'intensité mesurée, au cours de l'étape b), sur ladite au moins une zone de la répartition spatiale et l'intensité prise en compte, au cours de l'étape c), dans la base de données sur ladite au moins une zone de la répartition spatiale sont chacune une intensité moyenne sur ladite zone considérée.

11. Procédé selon l'une des revendications 1 à 9, dans lequel l'intensité mesurée, au cours de l'étape b), sur ladite au moins une zone de la répartition spatiale et l'intensité prise en compte, au cours de l'étape c), dans la base de données sur ladite au moins une zone de la répartition spatiale est une combinaison des coefficients de la décomposition de cette intensité dans une base constituée des différents modes de propagation.

12. Procédé selon l'une des revendications précédentes, dans lequel la région active du capteur optique comprend une ou plusieurs couche(s) métallique(s), de sorte que ledit capteur optique constitue un capteur à effet plasmon.

13. Procédé selon l'une des revendications 1 à 11, dans lequel la région active du capteur optique est constituée d'une ou plusieurs couche(s) diélectrique(s), de sorte que ledit capteur optique constitue un capteur interférométrique.

14. Procédé selon l'une des revendications précédentes, dans lequel le capteur optique comporte soit plusieurs guides d'onde disposés en parallèle et comprenant chacun une région, dite région active, recouverte d'au moins une couche métallique et/ou diélectrique en contact avec le milieu diélectrique, soit plusieurs guides d'onde disposés en parallèle et faisant chacun face à un autre guide d'onde, chaque dit un autre guide d'onde formant résonateur et constituant une région, dite région active, en contact avec le milieu diélectrique, lesdites étapes a), b) et c) étant mises en œuvre pour chacun desdites guides d'onde.

**Patentansprüche**

1. Verfahren zur Erfassung einer lokalen Variation des Brechungsindexes eines dielektrischen Milieus, das sich an der Oberfläche eines optischen Sensors befindet, wobei der optische Sensor zu diesem Zweck entweder eine Wellenführung beinhaltet, die einen Bereich, als aktiver Bereich bezeichnet, umfasst, der von mindestens einer Metall- und/oder dielektrischen Schicht in Kontakt mit dem dielektrischen Milieu überzogen ist, oder eine Wellenführung, die einer anderen Wellenführung zugewandt ist, wobei diese andere Wellenführung einen Resonator bildet und einen Bereich, als aktiver Bereich bezeichnet, darstellt, der in Kontakt mit dem dielektrischen Milieu ist, wobei das Verfahren die folgenden Schritte umfasst:

a) Aussenden eines Lichtstrahls am Eingang der Wellenführung, sodass sich dieser Lichtstrahl innerhalb der Wellenführung gemäß mindestens N Ausbreitungsmodi in Richtung des aktiven Bereichs ausbreiten kann, wo N eine ganze natürliche Zahl derart ist, dass $N \geq 2$; der vom aktiven Bereich reflektierte oder übertragene Lichtstrahl so eine gegebene räumliche Aufteilung der Intensität aufweist;
b) Messen, über mindestens eine Zone der räumlichen Aufteilung der Intensität des vom aktiven Bereich des optischen Sensors reflektierten oder übertragenen Lichtstrahls, die nur einen Teil dieser räumlichen Aufteilung berücksichtigt, der Intensität über die mindestens eine Zone; und
c) Erfassen der lokalen Variation des Brechungsindexes des dielektrischen Milieus mittels einer Datenbank, die die Verknüpfung zwischen der Intensität der mindestens einen Zone der räumlichen Aufteilung der Intensität des vom aktiven Bereich des optischen Sensors reflektierten oder übertragenen Lichtstrahls und einer Variation des Brechungsindexes in Bezug auf ein Referenzmilieu bereitstellt.

2. Verfahren nach Anspruch 1, wobei die im Schritt c) erfolgte Erfassung aus einem Bestimmen des Werts der lokalen Variation des Brechungsindexes des dielektrischen Milieus besteht.

3. Verfahren nach dem vorstehenden Anspruch, wobei ein Schritt umgesetzt wird, der aus einem Bestimmen des Werts des Brechungsindexes des Referenzmilieus, dann, nachdem der Wert der lokalen Variation des Brechungsindexes des dielektrischen Milieus im Laufe des Schrittes c) bestimmt wurde, aus einem Bestimmen des Werts des Brechungsindexes des dielektrischen Milieus besteht.

4. Verfahren nach einem der vorstehenden Ansprüche, wobei zwischen dem Schritt a) und dem Schritt b) ein zusätzlicher Schritt erfolgt, der aus einem Filtern von höchstens N-1 Ausbreitungsmodi besteht, wobei dieses Filtern über den oder die Modi ausgeführt wird, die am wenigsten dafür anfällig sind, vom aktiven Bereich modifiziert zu werden, oder die vom aktiven Bereich nicht modifiziert wurden.

5. Verfahren nach dem vorstehenden Anspruch, wobei der zusätzliche Schritt bezüglich der Wegrichtung des Lichtstrahls in der Wellenführung dem aktiven Bereich des optischen Sensors vorgelagert erfolgt, um ein Filtern über den oder die Modi zu gewährleisten, die am wenigsten dafür anfällig sind, vom aktiven Bereich modifiziert zu werden.

6. Verfahren nach dem vorstehenden Anspruch, wobei der zusätzliche Schritt mittels eines Objektivs "schwarzer Hintergrund", das heißt, eines Objektivs, das in seiner Mitte eine opake Blende aufweist, erfolgt.

7. Verfahren nach Anspruch 4, wobei der zusätzliche Schritt bezüglich der Wegrichtung des Lichtstrahls in der Wellenführung dem aktiven Bereich des optischen Sensors nachgelagert erfolgt, um ein Filtern mindestens über den oder die Modi zu gewährleisten, die nicht vom aktiven Bereich modifiziert wurden.

8. Verfahren nach einem der vorstehenden Ansprüche, wobei die Wellenführung eine Glasfaser ist.

9. Verfahren nach dem vorstehenden Anspruch, wobei, da das Verfahren reflektierend eingesetzt wird, der aktive Bereich des optischen Sensors, der somit der aktive Bereich der Glasfaser ist, eine Kegelstumpfform aufweist, an dessen Ende sich ein Spiegel befindet.

10. Verfahren nach einem der vorstehenden Ansprüche, wobei die im Schritt b) über die mindestens eine Zone der räumlichen Aufteilung gemessene Intensität und die im Schritt c) in der Datenbank über die mindestens eine Zone der räumlichen Aufteilung berücksichtige Intensität jeweils eine durchschnittliche Intensität über die betrachtete Zone sind.

11. Verfahren nach einem der Ansprüche 1 bis 9, wobei die im Schritt b) über die mindestens eine Zone der räumlichen Aufteilung gemessene Intensität und die im Schritt c) in der Datenbank über die mindestens eine Zone der räumlichen Aufteilung berücksichtige Intensität eine Kombination der Koeffizienten der Zerlegung dieser Intensität in einer aus den verschiedenen Ausbreitungsmodi dargestellten Basis ist.

12. Verfahren nach einem der vorstehenden Ansprüche, wobei der aktive Bereich des optischen Sensors eine oder mehrere Metallschicht(en) umfasst, sodass der optische Sensor einen Sensor mit Plasmonwirkung darstellt.

13. Verfahren nach einem der Ansprüche 1 bis 11, wobei der aktive Bereich des optischen Sensors aus einer oder mehreren dielektrischen Schicht(en) besteht, sodass der optische Sensor einen interferometrischen Sensor darstellt.

14. Verfahren nach einem der vorstehenden Ansprüche, wobei der optische Sensor entweder mehrere Wellenführungen beinhaltet, die parallel angeordnet sind und jeweils einen Bereich, als aktiver Bereich bezeichnet, umfassen, der von mindestens einer Metall- und/oder dielektrischen Schicht in Kontakt mit dem dielektrischen Milieu überzogen ist, oder mehrere Wellenführungen, die parallel angeordnet und jeweils einer anderen Wellenführung zugewandt sind, wobei die jeweils eine andere Wellenführung einen Resonator bildet und einen Bereich, als aktiver Bereich bezeichnet, darstellt ,der in Kontakt mit dem dielektrischen Milieu ist, wobei die Schritte a), b) und c) für jede dieser Wellenführungen umgesetzt werden.

# EP 3 364 171 B1

## Claims

1. Method for detecting a local change in refractive index of a dielectric medium located on the surface of an optical sensor, said optical sensor comprising for this purpose either a waveguide comprising a region, called the active region, covered with at least one metallic and/or dielectric layer in contact with the dielectric medium, or a waveguide facing another waveguide, this other waveguide forming a resonator and constituting a region, called the active region, in contact with the dielectric medium, said method comprising the following steps:

   a) emitting a light beam at the input of the waveguide so that this light beam can be propagated, within the waveguide, according to at least N propagation modes, where N is a natural integer such that $N \geq 2$, towards the active region;
   the light beam reflected or transmitted by the active region thus presenting a given spatial distribution of the intensity;
   b) measuring, on at least one zone of the spatial distribution of the intensity of the light beam reflected or transmitted by said active region of the optical sensor which only takes into account one part of said spatial distribution, the intensity on the said at least one zone; and
   c) detecting the local change in the refractive index of the dielectric medium by means of a database supplying the link between the intensity of said at least one zone of the spatial distribution of the intensity of the light beam reflected or transmitted by the active region of the optical sensor and a change in refractive index relative to a reference medium.

2. Method according to claim 1, in which the detection carried out in step c) consists of determining the value of the local change in the refractive index of the dielectric medium.

3. Method according to the preceding claim, in which a step is carried out that consists of determining the value of the refractive index of the reference medium and then, after determining the value of the local change in the refractive index of the dielectric medium during step c), determining the value of the refractive index of the dielectric medium.

4. Method according to one of the preceding claims, in which, between step a) and step b), an additional step is carried out, consisting of filtering at most N-1 propagation modes, said filtering being carried out on the mode or modes that are the least likely to be modified by the active region or that have not been modified by the active region.

5. Method according to the preceding claim, in which said additional step is carried out upstream, with reference to the direction of travel of the light beam in the waveguide, of the active region of the optical sensor to provide filtering on the mode or modes that are the least likely to be modified by the active region.

6. Method according to the preceding claim, in which said additional step is carried out by means of a "dark-field" objective, i.e. an objective having an opaque disc at its centre.

7. Method according to claim 4, in which said additional step is carried out downstream, with reference to the direction of travel of the light beam in the waveguide, of the active region of the optical sensor to provide filtering at least on the mode or modes that have not been modified by the active region.

8. Method according to one of the preceding claims, in which the waveguide is an optical fibre.

9. Method according to the preceding claim, in which, with the method carried out in reflection, the active region of the optical sensor, which is therefore the active region of the optical fibre, is of a truncated cone shape with a mirror located at its end.

10. Method according to one of the preceding claims, in which the intensity measured, during step b), on said at least one zone of the spatial distribution and the intensity taken into account, during step c), in the database on said at least one zone of the spatial distribution are each an average intensity over said zone under consideration.

11. Method according to one of claims 1 to 9, in which the intensity measured, during step b), on said at least one zone of the spatial distribution and the intensity taken into account, during step c), in the database on said at least one zone of the spatial distribution is a combination of the coefficients of the decomposition of this intensity in a base made up of the different propagation modes.

**12.** Method according to one of the preceding claims, in which the active region of the optical sensor comprises one or more metallic layer(s), so that said optical sensor constitutes a plasmon effect sensor.

**13.** Method according to one of claims 1 to 11, in which the active region of the optical sensor consists of one or more dielectric layer(s), so that said optical sensor constitutes an interferometric sensor.

**14.** Method according to one of the preceding claims, wherein the optical sensor either comprises several waveguides arranged in parallel, each one comprising a region, called the active region, covered with at least one metallic and/or dielectric layer in contact with the dielectric medium, or comprising several waveguides arranged in parallel, and each one facing another waveguide, each of which being called another waveguide forming a resonator and constituting a region, called the active region, in contact with the dielectric medium, said steps a), b) and c) being implemented for each of said waveguides.

*Fig. 1*

*Fig. 2*

Indice 1,336                    Indice 1,423

*Fig. 4*

Indice de réfraction

Variation de l'indice de réfraction par rapport à l'indice d'un milieu de référence (-)

*Fig. 3*

*Fig. 6*

*Fig. 7*

Fig. 8

Fig. 9

Fig. 5

GO=RA

20

A0

A0

M

F02

E

G

*Fig. 10*

GO=RA

20

G

A0

A0

G

F02

*Fig. 11*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5359681 A
- US 20140002821 A
- US 5815278 A

**Littérature non-brevet citée dans la description**

- **K. KURIHARA.** Fiber-optic conical microsensors for surface plasmon resonance using chemical etched single-mode fiber. *Analytica Chimica Acta,* 2004, vol. 523 (2), 165-170
- **ALLAN W. SNYDER ; JOHN D. LOVE.** Optical Waveguide Theory. Chapman et Hall Ltd, 2012
- Properties of silica glass image fiber and its application. **CHIGUSA.** Optoelectronics Devices and Technologies. société Fiber and Technology, 1986, vol. 1, 203-216
- **F. DEISS.** Nanostructured optical fibre arrays for high-density biochemical sensing and remote imaging. *Analytical and Bioanalytical Chemistry,* 2010, vol. 396 (1), 53-71
- **CAO JIE.** Wavelength-based localized surface plasmon resonance optical fiber biosensor. *Sensors and Actuators B : Chemical,* 2013, vol. 181, 611-619
- A rapid method for determining dynamic binding capacity of resins for the purification of proteins. *Protein expression and purification,* 2008, vol. 60 (2), 147-150
- **LUCHANSKY.** High-Q optical sensors for chemical and biological analysis. *Analytical chemistry,* 2011, vol. 84 (2), 793-821
- **KIM.** Integrated photonic glucose biosensor using a vertically coupled microring resonator in polymers. *Optics Communications,* 2008, vol. 281 (18), 4644-4647
- **M. KREYSING.** Dynamic operation of optical fibers beyond the single-mode regime facilitates the orientation of biological cells. *Nature Communications,* vol. 5
- **J.W. NICHOLSON.** Spatially and spectrally resolved imaging of modal content in large-mode-area fibers. *Optics Express,* 2008, vol. 16 (10), 7233-7243
- **LOTERIE.** Digital confocal microscopy through a multimode fiber. *Optics express,* 2015, vol. 23 (18), 23845-23858
- **M. KAWACHI.** Silica waveguides on silicon and their application to integrated-optic components. *Optical and Quantum Electronics,* 1990, vol. 22 (5), 391-416